## Europäisches Patentamt

## European Patent Office

## Office européen des brevets

(19)

(11) Veröffentlichungsnummer: **0 339 115**

**A1**

(12) **EUROPÄISCHE PATENTANMELDUNG**

(21) Anmeldenummer: 88106857.1

(51) Int. Cl.4: **G06F 12/14**

(22) Anmeldetag: 28.04.88

(43) Veröffentlichungstag der Anmeldung:
02.11.89 Patentblatt 89/44

(84) Benannte Vertragsstaaten:
AT BE CH DE ES FR GB IT LI NL SE

(71) Anmelder: **Siemens Aktiengesellschaft**
**Wittelsbacherplatz 2**
**D-8000 München 2(DE)**

(72) Erfinder: **Dörömbözi, Hans, Dipl.-Ing. (FH)**
**Jakob-Dörr-Strasse 49**
**D-7500 Karlsruhe 21(DE)**
Erfinder: **Lichtenberg, Karl-Heinz**
**Ferdinand-Koch-Strasse 11**
**D-6740 Landau(DE)**
Erfinder: **Wanner, Ursula**
**Ernst-Würtenberger-Strasse 6**
**D-7500 Karlsruhe 21(DE)**
Erfinder: **Wittek, Günter, Dipl.-Ing. (FH)**
**Am Steinweg 39**
**D-7507 Pfinztal 2(DE)**

(54) Verfahren zur Sicherung eines auf einem Speichermedium gespeicherten Programms.

(57) Die Erfindung betrifft ein Verfahren zur Sicherung eines auf einem Speichermedium gespeicherten Programms (PR1) für eine Datenverarbeitungsanlage (DVA) mit einem geschützten Speicherbereich (SB) und einer Entschlüsselungseinheit (ES).

Zur Erleichterung der Sicherung des Programms (PR1) vor unerlaubter Benutzung wird ein aus Merkmalsdaten (M1) einer Datenverarbeitungsanlage (DVA) und einem Programm (PS1) zugeordneten Attributdaten (A1, A2) gebildeter erster Datensatz (D1) zu einem zweiten Datensatz (D2) verschlüsselt; erst mit dem verschlüsselten zweiten Datensatz (D2) kann das geschützte Programm (PR1) freigegeben und zum Ablauf gebracht werden.

Die Erfindung ist vor allem anwendbar beim Betrieb von Datenverarbeitungsanlagen mit umfangreichen Programmen.

FIG 3

Xerox Copy Centre

## Verfahren zur Sicherung eines auf einem Speichermedium gespeicherten Programms

Die Erfindung betrifft ein Verfahren zur Sicherung eines auf einem Speichermedium gespeicherten Programms gemäß dem Oberbegriff des Anspruchs 1.

Der vermehrte Einsatz von Datenverarbeitungsanlagen in der Automatisierung stellt bezüglich der Sicherung (Schutz) des in der Datenverarbeitungsanlage eingesetzten Programms vor unerlaubter Benutzung hohe Anforderungen. Automatisierungsaufgaben können mit Datenverarbeitungsanlagen mit entsprechenden Programmen in gleicher Weise, wie es auch mit elektronischen Schaltungen möglich ist, gelöst werden, d. h., Aufgaben aus der Automatisierungstechnik werden in die Programme von Datenverarbeitungsanlagen "verlagert". Diese Programme gilt es, gegen unberechtigte Benutzung zu schützen. Dabei muß berücksichtigt werden, daß ein Anwender dieser Programme diese einfach archivieren und kopieren kann sowie eine gewohnte einfache Hantierung solcher Programme möglich ist.

Aus der europäischen Patentanmeldung 85 115 147.2 ist ein Software-Sicherungsverfahren bekannt, bei dem ein auf einem Speichermedium gespeichertes verschlüsseltes Programm auf einer Datenverarbeitungsanlage nur dann zum Ablauf kommt, falls dieses in Abhängigkeit eines geheimen Paßwortes zunächst entschlüsselt wurde. Dabei müssen unterschiedliche verschlüsselte Programme für ein Programm erstellt werden, falls mehrere Anwender auf ihren Datenverarbeitungsanlagen dieses nutzen wollen.

Der vorliegenden Erfindung liegt die Aufgabe zugrunde, bei einem Verfahren der eingangs genannten Art die Sicherung eines auf einem Speichermedium gespeicherten Programms zu erleichtern. Eine Verschlüsselung des zu schützenden Programms soll dabei vermieden werden.

Diese Aufgabe wird erfindungsgemäß durch die im kennzeichnenden Teil des Anspruchs 1 angegebenen Maßnahmen gelöst.

Das Verfahren zeichnet sich dadurch aus, daß ein Stapel von Programmen dem Anwender bereitgestellt wird. Ein Stapel enthält alle Programme, die auf einer Datenverarbeitungsanlage ablauffähig sind, wobei zu Archivierungszwecken eine beliebige Anzahl von Kopien des Stapels erstellt werden kann. Der Anwender kann allerdings nur die Programme auf seiner Datenverarbeitungsanlage benutzen, die für diese freigegeben sind. Merkmalsdaten einer Datenverarbeitungsanlage und Attributdaten eines Programms geben vor, welches Programm für eine Datenverarbeitungsanlage freigegeben ist. Merkmalsdaten einer Datenverarbeitungsanlage können z. B. die Nummer dieser Datenverarbeitungsanlage sein, die z. B. in einem Festwertspeicher der Datenverarbeitungsanlage hinterlegt wird, oder die Konfiguration der Datenverarbeitungsanlage, z. B. Hauptspeicherausbau, Anzahl der Schnittstellen der Datenverarbeitungsanlage oder Anzahl der Datenverarbeitungsanlagen in einem Rechnerverbund. Als einem Programm zugeordnete Attributdaten werden z. B. dessen Produktname und die dazugehörige Versionsnummer bezeichnet. Z. B. der Produktname "FORTRAN-Compiler" und die Versionsnummer "V4.0" können als Attributdaten stehen. Die zeitliche Begrenzung der Ablauffähigkeit eines Programms auf einer Datenverarbeitungsanlage kann ebenfalls zur Bildung von Attributdaten herangezogen werden.

Als besonders vorteilhaft zeigt sich, daß in einer Verschlüsselungseinrichtung zum Verschlüsseln der Merkmalsdaten einer Datenverarbeitungsanlage und der Attributdaten eines Programms zu einem Datensatz, der als Freigabeinformation dient, der bekannte RSA-Algorithmus nach RIVEST, SHAMIR und ADLEMAN genutzt wird. Wie bekannt, werden bei dieser RSA-Verschlüsselung zwei Schlüssel zum Ver- und Entschlüsseln einer Information benötigt. Dieser Algorithmus zeichnet sich dadurch aus, daß die Kenntnis eines der beiden Schlüssel nicht ausreicht, den anderen Schlüssel zu ermitteln.

Anhand der Zeichnung, in der ein Ausführungsbeispiel veranschaulicht ist, werden die Erfindung, deren Ausgestaltungen sowie Vorteile näher beschrieben.

Es zeigen schematisch

Figur 1 Verfahrensschritte zur Erzeugung eines zu schützenden Programms,

Figur 2 Verfahrensschritte zur Verschlüsselung einer Freigabeinformation und

Figur 3 Verfahrensschritte zur Freigabe eines zu schützenden Programms.

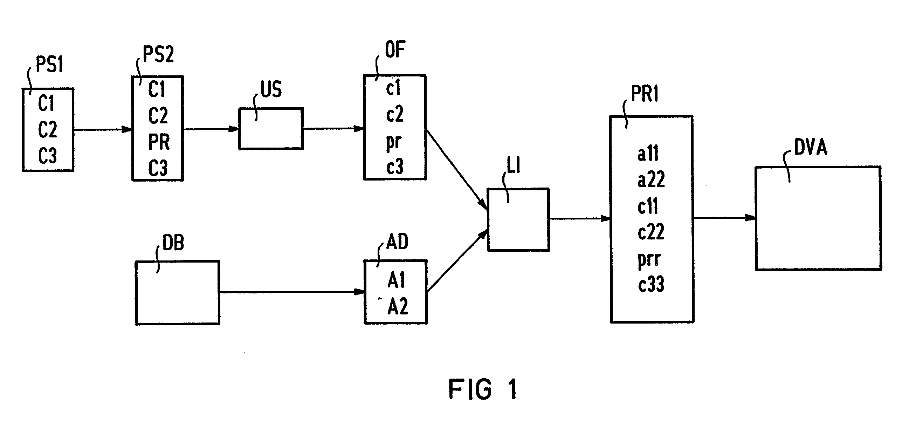

Um ein Programm vor unberechtigter Benutzung zu schützen, ist es zunächst erforderlich, aus diesem ein geschütztes Programm zu erzeugen (Figur 1). Einem in einem Quellcode vorliegenden Programm PS1 mit Codes C1, C2 und C3 wird ein Prüfprozeduraufruf PR eingefügt. Ein dadurch erzeugtes Programm PS2 wird mit einem Übersetzer US in ein Programm OF mit Objektcodes c1, c2, pr und c3 übersetzt. Eine Attributdatei AD wird mit den Attributdaten A1 und A2 erzeugt, die in einer Datenbank DB hinterlegt sind. Ein Linker LI erstellt aus dem Programm OF und der Attributdatei AD ein geschütztes Programm PR1 mit Objektcodes a11, a22, c11, c22, prr und c33, wobei a11 und a22 die umgesetzten Codes der Attributdaten A1 und A2 darstellen. Der im Objektcode vorliegende Prüfprozeduraufruf prr ruft während des Programmablaufs des Programms PR1 auf einer Datenverarbeitungsanlage DVA in dieser eine Prüfprozedur auf,
die nach durchgeführter Prüfung entscheidet, ob
das Programm PR1 auf dieser Datenverarbeitungsanlage DVA zum Ablauf kommt. Selbstverständlich
kann ein Programm mehrere Prüfprozeduraufrufe
enthalten.

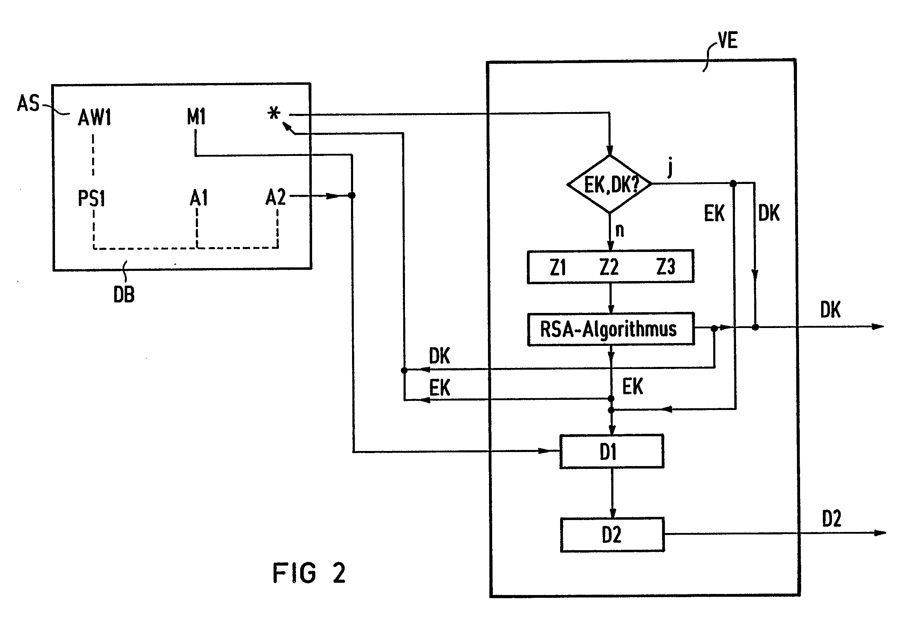

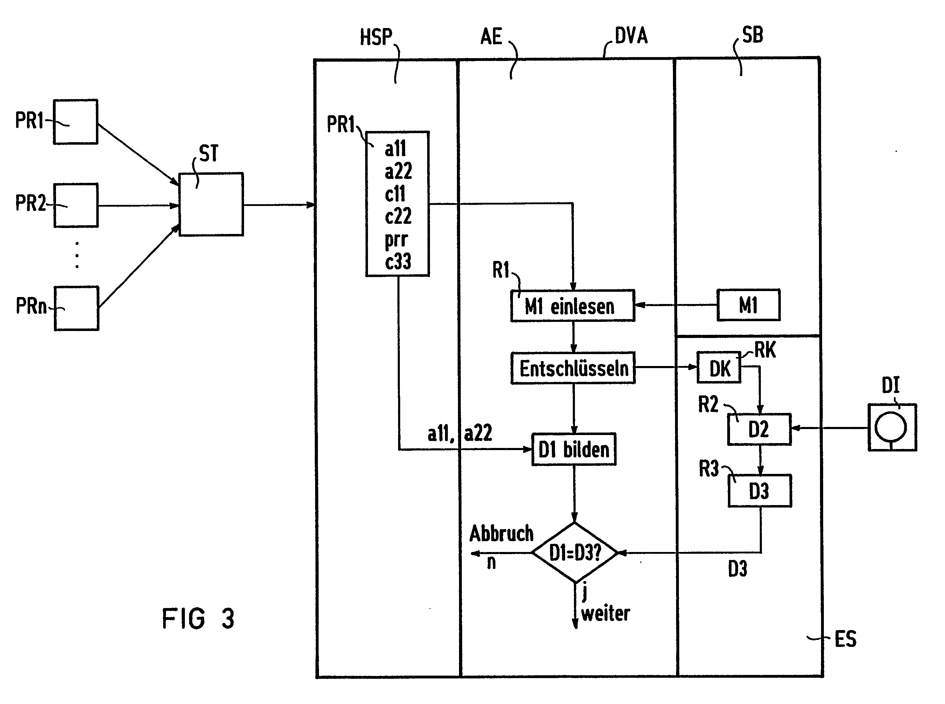

Die Attributdaten A1, A2 des Programms PS1
sind ebenso wie Merkmalsdaten M1 der Datenverarbeitungsanlage DVA eines Anwenders AW1 in
der Datenbank DB gespeichert (Figur 2). Die Merkmalsdaten M1 und die programmspezifischen Attributdaten A1, A2 werden einer Verschlüsselungseinheit VE zugeführt, die aus diesen Daten einen
Datensatz D1 bildet. Die Verschlüsselungseinheit
VE prüft zunächst, ob Schlüssel EK, DK in einem
Datensatz AS der anwenderspezifischen Daten
AW1, M1, * der Datenbank DB enthalten sind. Der
Schlüssel EK wird benötigt, um den Datensatz D1
zu einem Datensatz D2 zu verschlüsseln, der
Schlüssel DK, um den verschlüsselten Datensatz
D2 zu entschlüsseln. Das Zeichen "*" bedeutet,
daß dieser Platz für die Schlüssel EK, DK reserviert
ist. Falls die Schlüssel EK, DK vorhanden sind, so
werden diese zunächst aus der Datenbank DB ausgelesen, und der Datensatz D1 wird mit dem
Schlüssel EK verschlüsselt sowie der Schlüssel DK
der Datenverarbeitungsanlage DVA übertragen.
Falls keine Schlüssel EK, DK vorhanden sind, so
ermittelt die Verschlüsselungseinheit VE vorerst
drei Primzahlen Z1, Z2 und Z3, die, wie bekannt,
zur Erzeugung der Schlüssel EK, DK nach dem
RSA-Algorithmus notwendig sind. Anschließend
werden nach diesem RSA-Algorithmus die Schlüssel EK, DK bestimmt und in der Datenbank DB zu
dem Datensatz AS abgespeichert. Wie bereits aufgezeigt, wird der Schlüssel EK benutzt, um den
Datensatz D1 zu verschlüsseln, und der Schlüssel
DK wird der Datenverarbeitungsanlage bereitgestellt. Für jedes zu schützende Programm muß ein
verschlüsselter Datensatz D2 erzeugt werden. Falls
mehrere Programme auf derselben Datenverarbeitungsanlage DVA mit den Merkmalsdaten M1 ablaufen sollen, so ist es der Einfachheit halber
zweckmäßig, dem Anwender einen einzigen
Schlüssel DK zum Entschlüsseln der Datensätze
D2 bereitzustellen. Dabei ist zu beachten, daß die
verschiedenen Datensätze D1 mit dem zu dem
Schlüssel DK passenden Schlüssel EK verschlüsselt werden müssen; denn nur die Datensätze D2,
die mit dem Schlüssel EK durch Verschlüsselung
der Datensätze D1 erzeugt werden, können mit
dem dazugehörigen Schlüssel DK entschlüsselt
werden. Es besteht daher die Notwendigkeit, den
Schlüssel EK geheimzuhalten und z. B. in einer
Datenbank abzulegen. Im Gegensatz dazu kann der Schlüssel DK veröffentlicht werden. Bei bekanntem
Schlüssel DK kann zwar der verschlüsselte Datensatz D2 entschlüsselt werden, um einen entschlüsselten Datensatz D3 (Figur 3) zu erhalten, der
gleich dem Datensatz D1 ist. Nach einer Änderung
des Datensatzes D3, z. B. Änderung der Merkmalsdaten M1 mit dem Ziel, das Programm PR1 (Figur
1) auf einer anderen Datenverarbeitungsanlage ablaufen zu lassen, kann dieser geänderte Datensatz
wegen des fehlenden Schlüssels EK nicht derart
verschlüsselt werden, daß mit dem bekannten
Schlüssel DK der geänderte Datensatz nach einem
Prüfprozeduraufruf prr des laufenden Programms
PR1 (Figur 1) auf dieser Datenverarbeitungsanlage
wieder richtig entschlüsselt wird.

Der Schlüssel DK und der verschlüsselte Datensatz D2 können auf einer Diskette, auf einem
Magnetband oder einem sonstigen Speichermedium abgespeichert und dem Anwender bereitgestellt werden, der diese abgespeicherten Daten in
die Datenverarbeitungsanlage DVA überträgt. Weiterhin besteht die Möglichkeit, den verschlüsselten
Datensatz D2 telefonisch oder per Brief dem Anwender bereitzustellen, der diesen Datensatz D2
über eine Bedieneinheit in die Datenverarbeitungsanlage DVA eingibt. Selbstverständlich ist auch
eine Übertragung des verschlüsselten Datensatzes
D2 und des Schlüssels DK über eine Kopplung der
Verschlüsselungseinheit VE mit der Datenverarbeitungsanlage DVA (Datenfernübertragung, Teleservice) denkbar.

Um die Sicherheit des Verfahrens zu erhöhen,
ist es allerdings vorteilhaft, vor Auslieferung der
Datenverarbeitungsanlage DVA an den Anwender
den Schlüssel DK in einem geschützten Speicherbereich SB (Figur 3), auf den der Anwender keinen
Zugriff hat, zu hinterlegen. Dabei ist es zweckmäßig, die Erzeugung der Schlüssel EK, DK und die
Erstellung des Datensatzes D2 in der Verschlüsselungseinheit VE in getrennten Verfahrensschritten
durchzuführen. Vor Auslieferung der Datenverarbeitungsanlage DVA an den Anwender werden zunächst in der Verschlüsselungseinheit VE, wie beschrieben, die Schlüssel EK, DK erzeugt und in der
Datenbank DB (Figur 2) abgespeichert. Außerdem
wird der Schlüssel DK in dem geschützten Speicherbereich SB (Figur 3) der Datenverarbeitungsanlage DVA hinterlegt. Will nach der Auslieferung
der Datenverarbeitungsanlage DVA an den Anwender dieser mehrere Programme nutzen, so wird
schließlich, wie bereits erläutert, für jedes Programm in der Verschlüsselungseinheit VE ein Datensatz D2 mit dem in der Datenbank DB abgelegten Schlüssel EK erzeugt und dem Anwender bereitgestellt.

Wesentliche Bestandteile der Datenverarbeitungsanlage DVA zur Durchführung des Verfahrens
sind eine Entschlüsselungseinheit ES, eine Auswerteeinheit AE sowie der geschützte Speicher bereich SB (Figur 3). Der geschützte Speicherbereich SB kann ein Festwertspeicher oder ein gegen Zugriffe des Anwenders geschützter Teil des Hauptspeichers HSP der Datenverarbeitungsanlage DVA sein. Zweckmäßig sind die Entschlüsselungseinheit ES und die Auswerteeinheit AE vor Zugriffen durch den Anwender ebenfalls geschützte Bestandteile der Datenverarbeitungsanlage DVA. Mit ST ist ein Stapel von Programmen bezeichnet, der aus Programmen PR1, PR2 ... PRn erstellt und auf einem Datenträger abgespeichert wird. Das Programm PR1 mit den Codes a11, a22, c11, c22, prr und c33 (Figur 1) wird in den Hauptspeicher HSP geladen und gestartet. Ein hier nicht dargestellter Zentralprozessor der Datenverarbeitungsanlage DVA arbeitet die Codes des Programms PR1 ab. Die Abarbeitung des Prozeduraufrufs prr veranlaßt, daß die Auswerteeinheit AE die Merkmalsdaten M1, die in dem geschützten Speicherbereich SB hinterlegt sind, in das Register R1 einliest und daß die Entschlüsselung des Datensatzes D2 in der Entschlüsselungseinheit ES angestoßen wird. Dabei ist es erforderlich, daß der Datensatz D2, der auf einer Diskette DI abgespeichert ist, zuvor in das Register R2 der Entschlüsselungseinheit ES eingelesen wurde. Die Entschlüsselungseinheit ES ermittelt aus dem Datensatz D2 und dem im Register RK abgespeicherten Schlüssel DK den entschlüsselten Datensatz D3, der in einem Register R3 hinterlegt und der Auswerteeinheit AE zugeführt wird. Die Auswerteeinheit AE setzt die Codes a11 und a22 des Programms PR1 in die Attributdaten A1 und A2 um, erzeugt aus diesen Attributdaten und den Merkmalsdaten M1 den Datensatz D1 und vergleicht diesen mit dem entschlüsselten Datensatz D3. Falls der Datensatz D1 ungleich dem Datensatz D3 ist, unterbricht die Auswerteeinheit AE eine weitere Programmbearbeitung des Programms PR1, d. h., das Programm PR1 ist für die Datenverarbeitungsanlage DVA nicht freigegeben. Bei Gleichheit der Datensätze D1 und D3 wird das Programm PR1 weiter durch den Zentralprozessor abgearbeitet.

## Ansprüche

1. Verfahren zur Sicherung eines auf einem Speichermedium gespeicherten Programms (PR1) für eine Datenverarbeitungsanlage (DVA) mit einem geschützten Speicherbereich (SB) und einer Entschlüsselungseinheit (ES),
**dadurch gekennzeichnet, daß**
- die Datenverarbeitungsanlage (DVA) eine Auswerteeinheit (AE) aufweist,
- die Datenverarbeitungsanlage (DVA) Merkmalsdaten (M1) in dem geschützten Speicherbereich (SB) speichert,
- das Programm (PR1) umgesetzte Codes (a11, a22) von Attributdaten (A1, A2) enthält,
- eine Verschlüsselungseinrichtung (VE) aus den Merkmalsdaten (M1) und den einem Programm (PS1) zugeordneten Attributdaten (A1, A2) einen ersten Datensatz (D1) bildet und aus diesem mit einem ersten Schlüssel (EK) einen verschlüsselten zweiten Datensatz (D2) erzeugt, der in die Datenverarbeitungsanlage (DVA) übertragen wird,
- die Entschlüsselungseinheit (ES) durch Entschlüsselung des verschlüsselten zweiten Datensatzes (D2) mit einem zweiten Schlüssel (DK) einen entschlüsselten dritten Datensatz (D3) ermittelt und
- das Programm (PR1) auf der Datenverarbeitungsanlage (DVA) abläuft, falls eine Auswerteeinheit (AE) erkennt, daß der dritte Datensatz (D3) gleich dem ersten Datensatz (D1) ist.

2. Verfahren nach Anspruch 1, **dadurch gekennzeichnet,** daß
- der erste Schlüssel (EK) und der zweite Schlüssel (DK) nach dem RSA-Algorithmus gebildet werden.

3. Verfahren nach Anspruch 1 oder 2, **dadurch gekennzeichnet,** daß
- der verschlüsselte zweite Datensatz (D2) durch ein Speichermedium oder durch Datenfernübertragung zur Datenverarbeitungsanlage (DVA) übertragen wird.

Neu eingereicht / Newly
Nouvellement dépo

I P 4422 E

FIG 1

FIG 2

EP 0 339 115 A1

FIG 3

Nouvelle page

3 P 4422 E

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-4 593 353 (PICKHOLTZ) <br> * Figuren 1,2; Spalte 2, Zeilen 26-54; Spalte 3, Zeilen 37-54; Spalte 4, Zeile 37 - Spalte 5 * <br> --- | 1-3 | G 06 F 12/14 |
| D,Y | EP-A-0 191 162 (IBM) <br> * Figuren 7,13,14; Spalte 8, Zeile 63 - Spalte 9, Zeile 39; Spalte 10, Zeile 41 - Spalte 12, Zeile 30 * <br> ----- | 1-3 | |

**RECHERCHIERTE SACHGEBIETE (Int. Cl.4)**

G 06 F 12/14

Der vorliegende Recherchenbericht wurde für alle Patentansprüche erstellt

| Recherchenort | Abschlußdatum der Recherche | Prüfer |
|---|---|---|
| DEN HAAG | 21-12-1988 | LEDRUT P. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...........................................................................
& : Mitglied der gleichen Patentfamilie, übereinstimmendes
    Dokument

EPO FORM 1503 03.82 (P0403)